# EUROPÄISCHE PATENTSCHRIFT

(11) **EP 1 721 044 B1**
(45) Veröffentlichungstag und Bekanntmachung des Hinweises auf die Patenterteilung: **14.03.2012**
(21) Anmeldenummer: 05707739.8
(22) Anmeldetag: 04.01.2005
(51) Int. Cl.: E01B 11/50, C21D 9/50

(54) **SCHWEISSAGGREGAT ZUR VERSCHWEISSUNG VON ZWEI SCHIENEN EINES GLEISES UND VERFAHREN**
WELDING UNIT FOR WELDING TWO RAILS OF A TRACK AND CORRESPONDING METHOD
GROUPE DE SOUDAGE POUR SOUDER DEUX RAILS D'UNE VOIE ET PROCEDE CORRESPONDANT

(30) Priorität: 23.02.2004 AT 12904 U
(43) Veröffentlichungstag der Anmeldung: 15.11.2006
(73) Patentinhaber: Franz Plasser Bahnbaumaschinen-Industriegesellschaft m.b.H., 1010 Wien (AT)
(72) Erfinder: MÜHLLEITNER, Heinz, A-3100 St. Pölten (AT)
(86) Internationale Anmeldenummer: PCT/EP2005/050014
(87) Internationale Veröffentlichungsnummer: WO 2005/080685

(56) Entgegenhaltungen:
- FR-A- 841 129
- GB-A- 2 185 703
- GB-A- 2 299 044
- US-A- 4 573 666

## Beschreibung

Die Erfindung betrifft ein Schweißaggregat gemäß den im Oberbegriff von Anspruch 1 angeführten Merkmalen, sowie ein Verfahren, gemäß den im Oberbegriff von Anspruch 9 angeführten Merkmalen.

Derartige Schweißaggregate zum sogenannten mobilen Abbrennstumpfschweißen sind bereits aus einer Vielzahl von Veröffentlichungen in verschiedenen Ausführungen bekannt geworden, wie beispielsweise durch US 3,349,216, EP 0 132 227 B1 oder GB 2 185 703 A.

Gemäß einem Artikel in der Fachzeitschrift "Rail Engineering International" Edition 2002, 3, Seiten 11 bis 16, ist es auch bekannt, den Schweißstoß bei kopfgehärteten Schienen durch Luftzufuhr zu kühlen. Dazu wird eine spezielle, Kühlöffnungen aufweisende Kühlhaube nach Entfernung des Schweißaggregates über den glühenden Schweißstoß gelegt und komprimierte Luft zugeführt. Der Nachteil einer derartigen Kühlung besteht darin, dass verschiedene wesentliche Vorgänge, wie die Entfernung des Schweißaggregates, die Menge der zugeführten Druckluft oder die Dauer der Kühlung von der Geschicklichkeit und Zuverlässigkeit der Bedienungsperson abhängig sind.

GB-A-2299044 offenbart sämtliche Merkmale des Oberbegriffs der Ansprüche 1 sowie 9, und beschreibt die Herstellung langverschweißter Schienen durch Abbrennstumpfschweißen. Der Schweißstoß wird anschließend an die Schweißung nachbehandelt, und zwar u.a. durch Zuführung von Druckluft, die mittels einer Kühlhaube von allen Seiten auf die Schweißstelle geblasen wird.

Die Aufgabe der vorliegenden Erfindung liegt nun in der Schaffung eines Schweißaggregates der gattungsgemäßen Art, mit dem eine optimale Verschweißung von kopfgehärteten Schienen durchführbar ist. Erfindungsgemäß wird diese Aufgabe mit einem Schweißaggregat bzw einem Verfahren der eingangs genannten Art durch die im Kennzeichen von Anspruch 1 bzw. Anspruch 9 angeführten Merkmale gelöst.

Eine derartige Ausbildung ermöglicht unmittelbar an die Entfernung des Schweißgrates anschließend eine kontrollierte und qualitativ jederzeit reproduzierbare Abkühlung des Schweißstoßes. Durch die Befestigung der Luftdüse in vorteilhafter Weise direkt am Abschermesser wird diese automatisch genau über dem Schweißstoß positioniert. In Verbindung mit dem Temperaturfühler ist die Kühlung exakt im günstigsten Temperaturbereich durchführbar, wobei durch die Steuereinrichtung eine Regulierung der Luftzufuhr zur Erzielung einer gleichmäßigen Abkühlung mit einer optimalen Aufhärtung des Schienenkopfes möglich ist.

Weitere Vorteile und Ausbildungen der Erfindung ergeben sich aus den weiteren Ansprüchen und der Zeichnung.

Im folgenden wird die Erfindung anhand eines in der Zeichnung dargestellten Ausführungsbeispieles näher beschrieben.

Es zeigen:
Fig. 1 eine Seitenansicht eines Schweißaggregates mit einer teilweise dargestellten Schweißmaschine,
Fig. 2 eine vergrößerte Seitenansicht einer Luftdüse des Schweißaggregates, und
Fig. 3 eine vergrößerte Ansicht der Luftdüse in Schienenlängsrichtung.

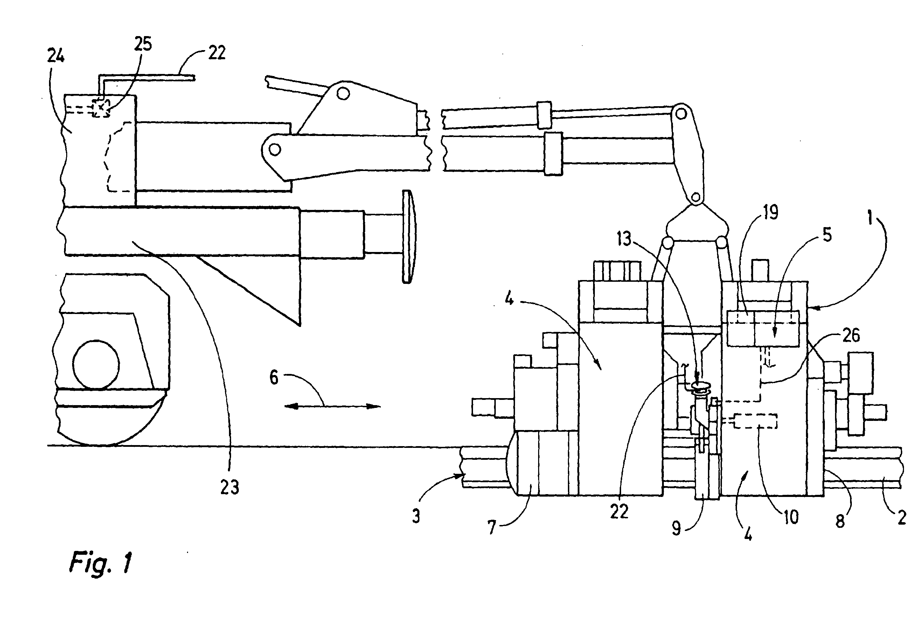

In Fig. 1 ist ein mobiles Schweißaggregat 1 zu sehen, das zur Durchführung von elektrischen Widerstandsschweißungen von Schienen 2 eines Gleises 3 ausgebildet ist. Das von einer Schweißmaschine 23 aus mit Energie versorgbare Schweißaggregat 1 besteht aus zwei Aggregathälften 4 sowie einer Steuereinrichtung 5. Die beiden Aggregathälften 4 sind anhand von in einer Schienenlängsrichtung 6 verlaufenden, hydraulischen Stauchzylindern 7 miteinander verbunden sowie relativ zueinander verstellbar.

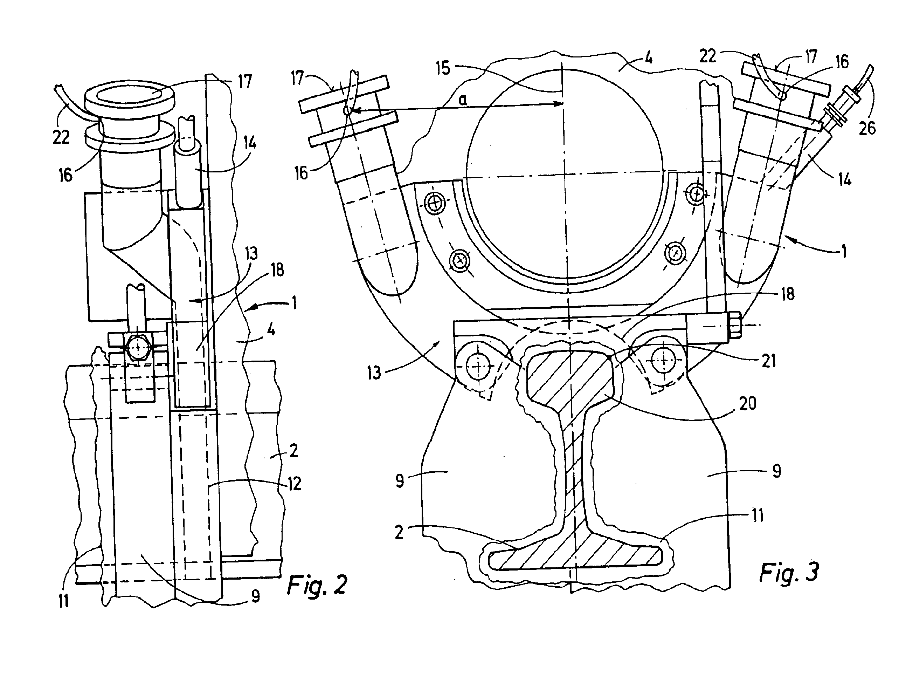

Jede Aggregathälfte 4 weist ein Paar von - normal zur Schienenlängsrichtung einander gegenüber liegenden - Klemmbacken 8 auf, die zur Durchführung der Schweißung an die Schienen 2 anpreßbar sind. Zwischen den beiden Aggregathälften 4 ist ein Abschermesser 9 vorgesehen, das durch einen Antrieb 10 - relativ zu beiden Aggregathälften 4 - in Schienenlängsrichtung verschiebbar ist, um einen Schweißgrat 11 von einem Schweißstoß 12 abzuscheren (Fig.2).

Wie weiters in Fig. 2 und 3 genauer ersichtlich, ist direkt am Abschermesser 9 ist eine Luftdüse 13 mit einem Temperaturfühler 14 befestigt. Die Steuereinrichtung 5 ist für eine Zufuhr von Druckluft zur Luftdüse 13 innerhalb eines wählbaren, auf die Temperatur des Schweißstoßes 12 bezugnehmenden Temperaturbereiches ausgebildet. Der Luftdüse 13 sind zwei Druckluft- und zwei Ansaugöffnungen 16,17 zugeordnet, die jeweils in einer normal zur Schienenlängsrichtung 6 verlaufenden Querrichtung in einem gleichen Abstand a zu einer Schienensymmetrieebene 15 angeordnet sind. Die Druckluftöffnung 16 ist jeweils unterhalb der Ansaugöffnung 17 angeordnet, wobei ein Querschnitt der Ansaugöffnung 17 wenigstens um einen Faktor 3 größer ist als ein Querschnitt der Druckluftöffnung 16.

Der Temperaturfühler 14 ist als Infrarot - Pyrometer für eine berührungslose Temperaturmessung eines auf einem Schienenkopf 20 positionierten Messpunktes 21 des Schweißstoßes 12 ausgebildet ist. Mit der Druckluftöffnung 16 ist eine Druckluftleitung 22 verbunden, die an eine in der Schweißmaschine 23 befindliche Luftkompressoranlage 24 angeschlossen ist. In dieser befindet sich ein von der Steuereinrichtung 5 beaufschlagbares Ventil 25 zur Steuerung der Druckluftzufuhr.

Die Steuereinrichtung 5 ist zur Eingabe einer Start- und einer Stopptemperatur ausgebildet, bei der automatisch die Luftzufuhr über die Druckluftleitungen 22 gestartet bzw. gestoppt wird. Dazu ist der Temperaturfühler 14 über eine Leitung 26 mit der Steuereinrichtung 5 verbunden. Diese ist außerdem mit einem Speichermedium 19 ausgestattet, um die Parameter Start- und Abkühltemperatur, Dauer der Druckluftzufuhr sowie Temperaturverlauf während der Abkühlphase zu registrieren und aufzuzeichnen.

Im folgenden wird die Funktionsweise des Schweißaggregates näher beschrieben.

Zur Verschweißung wird das Schweißaggregat 1 von der Schweißmaschine 23 auf die beiden miteinander zu verbindenden Schienen 2 abgesenkt und mit diesen durch die Klemmbacken 8 kontaktiert. Unter Stromzufuhr erfolgt in bekannter Weise die Bildung eines glühenden Schweißstoßes 12 sowie eines Schweißgrates 11. Dieser wird sofort vom Schweißstoß 12 abgeschert, indem das Abschermesser 9 durch den Antrieb 10 relativ zu den beiden weiterhin die Schienen kontaktierenden Aggregathälften 4 in Schienenlängsrichtung 6 bewegt wird. Dabei wird der abgescherte Schweißgrat 11 vom glühenden Schweißstoß 12 distanziert (s. Fig. 2) und die an der Rückseite des Abschermessers 9 befestigte Luftdüse 13 mit deren Kühlöffnung 18 automatisch genau über dem Schweißstoß 12 positioniert.

Nach Registrierung der idealen Starttemperatur für die Abkühlphase durch den Temperaturfühler 14 erfolgt mit Hilfe der Steuereinrichtung 5 ein Öffnen des Ventils 25, wodurch der Luftdüse 13 über die Druckluftleitungen 22 getrocknete Druckluft (6 bar Druck, 1.400 Liter/Minute) kontrolliert zugeführt wird. Dadurch wird Umgebungsluft in die beiden Ansaugöffnungen 17 angesaugt (25.000 Liter/Minute) und über die Kühlöffnung 18 dem Schweißstoß 12 im Bereich des Schienenkopfes 20 zu dessen Abkühlung zugeführt. Sobald durch den Temperaturfühler 14 am Messpunkt 21 eine kritische Abkühltemperatur registriert wird, erfolgt eine Unterbrechung der Druckluftzufuhr und Beendigung der Abkühlphase. Damit wurde eine Aufhärtung des Schweißstoßes 12 im Bereich des Schienenkopfes 20 in eine Tiefe von 15 mm erreicht. Abschließend erfolgt ein Lösen der Klemmbacken 8 und der Abschermesser 9 von der Schiene 2 und ein Anheben des Schweißaggregates 1 für eine Weiterfahrt zur nächsten Schweißstelle.

Die Starttemperatur für den Beginn der kontrollierten Abkühlung sollte in einem Bereich von 800º C bis 850º C liegen. Die kritische Temperatur für die Beendigung der Abkühlphase sollte bei 500º C sein. Dabei ist besonders zu beachten, dass der späteste Zeitpunkt für den Beginn der Abkühlung des Schweißstoßes 12 dreißig Sekunden nach der Beendigung der Schweißung liegt. Da diese Abkühlparameter natürlich abhängig sind von Art der verschweißten Schienen bzw. den Vorgaben des Schienenherstellers, ist es besonders vorteilhaft, wenn verschiedene, jeweils an eine bestimmte Schienentype optimal angepasste Abkühlparameter in der Steuereinrichtung 5 gespeichert und durch Knopfdruck abrufbar sind.

Die Parameter Start- und Abkühltemperatur, Dauer der Luftzufuhr sowie Temperaturverlauf werden bei jeder Abkühlung eines Schweißstoßes 12 registriert und aufgezeichnet. Die Menge der über die Luftdüse 13 der Kühlöffnung 18 zugeführten Druckluft wird automatisch derart geregelt, dass eine gleichmäßige Abkühlgeschwindigkeit (z.B. 4º Celsius/Sekunde) des Schweißstoßes 12 erreicht wird. Die Steuereinrichtung 5 gibt den Start des Schweißprozesses erst dann frei, wenn genügend Druckluft in der Luftkompressoranlage 24 vorhanden ist.

## Patentansprüche

1. Schweißaggregat (1) zur Verschweißung von zwei Schienen (2) eines Gleises (3), bestehend aus zwei durch Stauchzylinder (7) in Schienenlängsrichtung (6) bewegbaren, jeweils zur Anlage an die Schienen (2) vorgesehene Klemmbacken (8) aufweisenden Aggregathälften (4) und einem zwischen diesen angeordneten Abschermesser (9) zum Abscheren eines, Schweißgrates (11) von einem Schweißstoß (12), **dadurch gekennzeichnet, dass** an einer Aggregathälfte (4) eine Steuereinrichtung (5) für eine Zufuhr von Druckluft zu einer Luftdüse (13) vorgesehen ist, wobei die Luftdüse (13) mit einem Temperaturfühler (14) am Abschermesser (9) befestigt ist.

2. Schweißaggregat nach Anspruch 1, **dadurch gekennzeichnet, dass** die Steuereinrichtung (5) zur Eingabe einer Starttemperatur für einen automatischen Start der Luftzufuhr in Abhängigkeit von einer vom Temperaturfühler (14) registrierbaren Temperatur des Schweißstoßes (12) ausgebildet ist.

3. Schweißaggregat nach Anspruch 1 oder 2, **dadurch gekennzeichnet, dass** die Steuereinrichtung (5) zur Eingabe einer Stopptemperatur für eine automatische Beendigung der Luftzufuhr in Abhängigkeit von einer vom Temperaturfühler (14) registrierbaren Temperatur des Schweißstoßes (12) ausgebildet ist.

4. Schweißaggregat nach einem der Ansprüche 1, 2 oder 3, **dadurch gekennzeichnet, dass** die Zufuhr der Druckluft zur Luftdüse (13) durch die Steuereinrichtung (5) in Abhängigkeit von der durch den Temperaturfühler (14) registrierbaren Temperatur des Schweißstoßes (12) steuerbar ist.

5. Schweißaggregat nach einem der Ansprüche 1 bis 4, **dadurch gekennzeichnet, dass** die Luftdüse (13) eine unmittelbar über einem Schienenkopf (20) des Schweißstoßes (12) positionierbare Kühlöffnung (18), eine mit einer Druckluftleitung (22) in Verbindung stehende Druckluftöffnung (16) sowie eine Ansaugöffnung (17) zur Aufnahme von Umgebungsluft aufweist.

6. Schweißaggregat nach Anspruch 5, **dadurch gekennzeichnet, dass** der Luftdüse (13) zwei Druckluft- (16) und zwei Ansaugöffnungen (17) zugeordnet sind, die jeweils in einer normal zur Schienenlängsrichtung (6) verlaufenden Querrichtung in einem gleichen Abstand a zu einer Schienensymmetrieebene (15) angeordnet sind.

7. Schweißaggregat nach Anspruch 5 oder 6, **dadurch gekennzeichnet, dass** die Druckluftöffnung (16) unterhalb der Ansaugöffnung (17) angeordnet ist, wobei ein Querschnitt der Ansaugöffnung (17) wenigstens um einen Faktor 3 größer ist als ein Querschnitt der Druckluftöffnung (16).

8. Schweißaggregat nach Anspruch 1, **dadurch gekennzeichnet, dass** der Temperaturfühler (14) als Infrarot - Pyrometer für eine berührungslose Temperaturmessung eines am Schienenkopf (20) positionierten Messpunktes (21) des Schweißstoßes (12) ausgebildet ist.

9. Verfahren zum Verschweißen von Schienen eines Gleises, indem zwei Schienen (2) unter geregelter Stromzufuhr erwärmt und anschließend unter Bildung eines Schweißstoßes (12) und Schweißgrates (11) mit hohem Druck aneinandergepresst werden, **gekennzeichnet durch** folgende Merkmale:
a) unmittelbar nach Abtrennung des Schweißgrates (11) vom Schweißstoß (12) kommt eine Luftdüse (13) mit einer Kühlöffnung (18) über dem glühenden Schweißstoß (12) zu liegen,
b) die Temperatur des Schweißstoßes (12) wird gemessen,
c) der Luftdüse (13) wird nach Erreichen einer kritischen Starttemperatur des Schweißstoßes (12) automatisch Druckluft und **durch** Einströmen derselben in die Luftdüse (13) angesaugte Umgebungsluft zugeführt,
d) die Zufuhr von Druckluft wird automatisch nach Erreichen einer kritischen Abkühltemperatur des Schweißstoßes (12) gestoppt,
e) das Schweißaggregat (1) wird von den verschweißten Schienen (2) abgehoben.

10. Verfahren nach Anspruch 9, **dadurch gekennzeichnet, dass** die Parameter Start- und Abkühltemperatur, Dauer der Druckluftzufuhr sowie Temperaturverlauf während der Abkühlphase registriert und aufgezeichnet werden.

11. Verfahren nach Anspruch 9 oder 10, **dadurch gekennzeichnet, dass** die Menge der über die Luftdüse (13) der Kühlöffnung (18) zugeführten Druckluft derart gesteuert wird, dass eine gleichmäßige Abkühlgeschwindigkeit (°Celsius/Sekunde) des Schweißstoßes (12) erreicht wird.

## Claims

1. A welding unit (1) for welding together two rails (2) of a track (3), consisting of two unit halves (4), movable in the longitudinal direction (6) of the rails by means of compression cylinders (7) and each comprising clamping jaws (8) provided for application to the rails (2), and a shearing knife (9) arranged between said unit halves (4) for shearing off a welding bead (11) from a welded joint (12), **characterized in that** a control device (5) for supplying compressed air to an air nozzle (13) is provided on one unit half (4), wherein the air nozzle (13) with a temperature sensor (14) is mounted on the shearing knife (9).

2. A welding unit according to claim 1, **characterized in that** the control device (5) is configured for inputting a starting temperature for automatically starting the supply of air in dependence upon a temperature of the welded joint (12) detectable by the temperature sensor (14).

3. A welding unit according to claim 1 or 2, **characterized in that** the control device (5) is configured for inputting a stopping temperature for automatically stopping the supply of air in dependence upon a temperature of the welded joint (12) detectable by the temperature sensor (14).

4. A welding unit according to one of claims 1, 2 or 3, **characterized in that** the supply of compressed air to the air nozzle (13) may be controlled by the control device (5) in dependence upon the temperature of the welded joint (12) detectable by the temperature sensor (14).

5. A welding unit according to one of claims 1 to 4, **characterized in that** the air nozzle (13) comprises a cooling opening (18) positionable immediately above a rail head (20) of the welded joint (12), a compressed air opening (16) connected to a compressed air line (22), and a suction port (17) for the intake of ambient air.

6. A welding unit according to claim 5, **characterized in that** associated with the air nozzle (13) are two compressed air openings (16) and two suction ports (17) which are arranged in each case, in a transverse direction extending perpendicularly to the longitudinal direction (6) of the rails, at an equal distance a from a plane of symmetry (15) of the rail.

7. A welding unit according to claim 5 or 6, **characterized in that** the compressed air opening (16) is arranged underneath the suction port (17), with a cross-section of the suction port (17) being larger, by at least a factor of three, than a cross-section of the compressed air opening (16).

8. A welding unit according to claim 1, **characterized in that** the temperature sensor (14) is designed as an infrared pyrometer configured for non-contact measuring of the temperature of a measuring point (21), positioned on the rail head (20), of the welded joint (12).

9. A method of welding together rails of a track, wherein two rails (2) are heated with regulated supply of current and subsequently are pressed against one another with high pressure, forming a welded joint (12) and a welding bead (11), **characterized by** the following features:
a) immediately after removal of the welding bead (11) from the welded joint (12), an air nozzle (13) having a cooling opening (18) comes to lie above the glowing welded joint (12),
b) the temperature of the welded joint (12) is measured,
c) as soon as the welded joint (12) reaches a critical starting temperature, compressed air and ambient air aspirated as a result of the compressed air streaming into the air nozzle (13) are automatically supplied to the air nozzle (13),
d) the supply of compressed air is automatically stopped as son as the welded joint (12) reaches a critical cooling temperature,
e) the welding unit (1) is lifted from the welded rails (2).

10. A method according to claim 9, **characterized in that** the parameters: starting and cooling temperature, duration of supplying compressed air, and temperature curve are registered and recorded during the cooling phase.

11. A method according to claim 9 or 10, **characterized in that** the amount of compressed air supplied to the cooling opening (18) via the air nozzle (13) is controlled in such a manner that the welded joint (12) is cooled at a steady rate (°Celsius/second).

## Revendications

1. Module de soudage (1) pour souder deux rails (2) d'une voie ferrée (3), constitué de deux moitiés de module (4) pouvant être déplacées par des cylindres de compression (7) dans la direction longitudinale des rails (6), présentant chacune des mâchoires de serrage (8) prévues pour l'appui sur les rails (2) et d'une lame de cisaillement (9) disposée entre celles-ci pour cisailler une bavure de soudage (11) d'un joint de soudure (12), **caractérisé en ce qu'**un dispositif de commande (5) est prévu sur une moitié de module (4) pour une amenée d'air comprimé à une buse d'air (13), dans lequel la buse d'air (13) est fixée à un capteur de température (14) sur la lame de cisaillement (9).

2. Module de soudage selon la revendication 1, **caractérisé en ce que** le dispositif de commande (5) est réalisé pour la saisie d'une température de démarrage pour un démarrage automatique de l'amenée d'air en fonction d'une température du joint de soudure (12) pouvant être détectée par le capteur de température (14).

3. Module de soudage selon la revendication 1 ou 2, **caractérisé en ce que** le dispositif de commande (5) est réalisé pour la saisie d'une température d'arrêt pour un arrêt automatique de l'amenée d'air en fonction d'une température du joint de soudure (12) pouvant être détectée par le capteur de température (14).

4. Module de soudage selon l'une quelconque des revendications 1, 2 ou 3, **caractérisé en ce que** l'amenée d'air comprimé à la buse d'air (13) peut être commandée par le dispositif de commande (5) en fonction de la température du joint de soudure (12) pouvant être détectée par le capteur de température (14).

5. Module de soudage selon l'une quelconque des revendications 1 à 4, **caractérisé en ce que** la buse d'air (13) présente une ouverture de refroidissement (18) pouvant être positionnée directement au-dessus d'une tête de rail (20) du joint de soudure (12), une ouverture d'air comprimé (16) connectée à une conduite d'air comprimé (22) ainsi qu'une ouverture d'aspiration (17) pour l'absorption d'air ambiant.

6. Module de soudage selon la revendication 5, **caractérisé en ce que** deux ouvertures d'air comprimé (16) et deux ouvertures d'aspiration (17) sont associées à la buse d'air (13), lesquelles sont disposées chacune dans une direction transversale s'étendant perpendiculairement à la direction longitudinale des rails (6) à un même écart a par rapport au plan de symétrie des rails (15).

7. Module de soudage selon la revendication 5 ou 6, **caractérisé en ce que** l'ouverture d'air comprimé (16) est disposée en dessous de l'ouverture d'aspiration (17), dans lequel une coupe transversale de l'ouverture d'aspiration (17) est au moins trois fois plus grande qu'une coupe transversale de l'ouverture d'air comprimé (16).

8. Module de soudage selon la revendication 1, **caractérisé en ce que** le capteur de température (14) est réalisé en tant que pyromètre à infrarouge pour une mesure de température sans contact d'un point de mesure (21) du joint de soudure (12) positionné au niveau de la tête de rail (20).

9. Procédé de soudage de rails d'une voie ferrée, en ce que deux rails (2) sont chauffés avec une alimentation électrique régulée, puis pressés l'un contre l'autre en formant un joint de soudure (12) et une bavure de soudage (11) à haute pression, **caractérisé par** les caractéristiques suivantes :
a) une buse d'air (13) avec une ouverture de refroidissement (18) vient en appui au-dessus du joint de soudure incandescent (12) directement après séparation de la bavure de soudage (11) du joint de soudure (12),
b) la température du joint de soudure (12) est mesurée,
c) de l'air comprimé est automatiquement amené à la buse d'air (13) après atteinte d'une température de démarrage critique du joint de soudure (12) et de l'air ambiant aspiré est amené par afflux d'air comprimé dans la buse d'air (13),
d) l'amenée d'air comprimé est automatiquement arrêtée après atteinte d'une température de refroidissement critique du joint de soudure (12),
e) le module de soudage (1) est soulevé des rails soudés (2).

10. Procédé selon la revendication 9, **caractérisé en ce que** les paramètres que sont la température de démarrage et de refroidissement, la durée de l'amenée d'air comprimé ainsi que la courbe de température pendant la phase de refroidissement sont détectés et enregistrés.

11. Procédé selon la revendication 9 ou 10, **caractérisé en ce que** la quantité d'air comprimé amené par le biais de la buse d'air (13) à l'ouverture de refroidissement (18) est commandée de telle sorte qu'une vitesse de refroidissement régulière (°Celsius/seconde) du joint de soudure (12) est obtenue.
